(19) Europäisches Patentamt

European Patent Office

Office européen des brevets

(11) Veröffentlichungsnummer : **0 173 159**
**B1**

(12) # EUROPÄISCHE PATENTSCHRIFT

(45) Veröffentlichungstag der Patentschrift :
25.05.88

(51) Int. Cl.⁴ : **A 61 C   1/08**

(21) Anmeldenummer : **85110106.3**

(22) Anmeldetag : **12.08.85**

(54) **Kupplungsvorrichtung für zahnärztliche Handstücke.**

(30) Priorität : **23.08.84 DE 3431052**

(43) Veröffentlichungstag der Anmeldung :
**05.03.86 Patentblatt 86/10**

(45) Bekanntmachung des Hinweises auf die Patenterteilung : **25.05.88 Patentblatt 88/21**

(84) Benannte Vertragsstaaten :
**AT CH DE FR GB IT LI**

(56) Entgegenhaltungen :
**DE-A- 2 549 177**
**DE-A- 3 108 967**
**FR-A- 1 161 157**
**FR-A- 2 525 462**
**FR-A- 2 542 189**
**GB-A- 2 092 450**

(73) Patentinhaber : **Siemens Aktiengesellschaft Berlin und München**
**Wittelsbacherplatz 2**
**D-8000 München 2 (DE)**

(72) Erfinder : **Fleer, Ernst-Otto**
**Friedrich-Ebert-Strasse 35**
**D-6140 Bensheim 3 (DE)**

EP 0 173 159 B1

## Beschreibung

Die Erfindung bezieht sich auf eine Kupplungsvorrichtung für den betriebsmäßig lösbaren Anschluß eines von mehreren, unterschiedlich gestalteten zahnärztlichen Handstücken, oder Teilen davon, an deren Kopfteile Kühlmittel und Licht benötigt werden, an ein Anschlußteil, enthaltend einen Kupplungskörper, der im gekuppelten Zustand in eine entsprechend ausgebildete Aufnahmehülse des Handstückes eingreift, an der die Kühlmittel von an der Umfangsfläche des Kupplungskörpers mündenden Kanälen übernommen und mittels weiterer Kanäle zum Kopfteil des Handstückes geführt werden, wobei im Inneren des Kupplungskörpers mit einer elektrischen Zuleitung verbundene Leitungen verlaufen, die bis zum vorderen Ende des zur Aufnahme einer Lampe ausgebildeten und zu diesem Zweck stirnseitig offenen Kupplungskörpers geführt sind und die dort in einem fest angeordneten Kontaktpaar enden, und wobei der Kupplungskörper ferner mit der elektrischen Zuleitung ·verbundene Schleifkontakte aufweist.

Aus der DE-A-25 49 177 (= US-A-4,080,737) ist eine Kupplungsvorrichtung bekannt, bei der an einem mit dem Versorgungsschlauch verbundenen Kupplungsteil verschiedene Handstücke (Turbinenhandstücke, Spritzhandstücke, Mikromotorhandstücke, Ultraschallhandstücke) betriebsmäßig, d. h. ohne Zuhilfenahme von Werkzeugen, an- und abgekuppelt werden können. An der Kupplungsstelle werden außer den Medien Luft und Wasser auch noch Spannung bzw. Licht übertragen. Zur Übertragung von Licht sind im Zentrum eines Kupplungszapfens ein lichtzuführendes Element in Form eines Lichtleiters und an der Stirnseite des Handstückes ein lichtweiterführendes Element, ebenfalls ein Lichtleiter, angeordnet. Im gekuppelten Zustand von Handstück und Kupplungszapfen stehen sich die Enden von lichtzuführendem und lichtweiterführendem Lichtleiter korrespondierend gegenüber.

Das lichtzuführende Element kann, wie aus einer anderen Kupplungsvorrichtung dieser Gattung bekannt (US-A-4,398,885), auch eine mit elektrischem Strom betriebene Lampe sein, die stirnseitig und im Zentrum des Zapfens in einer entsprechend ausgebildeten Lampenfassung gehaltert ist, an der die elektrischen Leitungen der Zuleitung an entsprechend ausgebildeten Kontakten enden. Nachdem bei dieser Kupplungsvorrichtung der Kupplungskörper als vom Versorgungsschlauch trennbares Teil ausgebildet ist, hat man an der Trennstelle, also an dem der Lampe abgewandten Ende des Kupplungskörpers, am Umfang eines der Anschlußrohre für die fluiden Medien zwei Schleifringe vorgesehen, die beim axialen Ankuppeln an den Versorgungsschlauch mit entsprechenden Kontaktfedern der elektrischen Zuleitungsenden des Versorgungsschlauches kontaktieren. Kupplungskörper und Versorgungsschlauch sind nicht gegeneinander verdrehbar, so daß die Schleifringe hier nicht die eigentliche Funktion von Schleifringen, nämlich einer Kontaktierung während einer Drehbewegung der Teile, erfüllen.

Neben den vorgenannten Ausführungen, bei denen das lichtzuführende Element (Lampe) im Kupplungskörper angeordnet ist, sind auch Ausführungen bekannt, bei denen die Lampe im Handstück, zweckmäßigerweise in der Nähe des Behandlungskopfes, angeordnet ist (DE-C-10 68 425). Die Spannungszuführung vom Kupplungskörper auf das Handstück erfolgt dort über konzentrisch angeordnete Schleifringe am einen und korrespondierend angeordnete Schleifkontakte am anderen Teil.

Die Anordnung der Lampe im schlauchseitigen Kupplungskörper hat zwar den Vorteil, daß bei Gebrauch verschiedener Handstücke nur eine Lampe vorzusehen ist (im Gegensatz zu der zuletzt erwähnten Ausführung, bei der für jedes Handstück eine Lampe vorgesehen sein muß), daß bei abgenommenem Handstück keine spannungsführenden Teile berührbar sind und daß die Handstücke selbst nicht mit elektrischen Kontakten, Leitungen und Lampen ausgerüstet zu sein brauchen ; die Anordnung der Lampe im schlauchseitigen Kupplungskörper ist jedoch nicht für jeden Anwendungsfall angezeigt.

Wenn, wie beispielsweise aus der US-A-4,278,428 bekannt, das Handstück selbst mehrteilig ausgebildet ist und man lediglich die mit unterschiedlichen Getriebeabstufungen versehenen Kopfteile auszuwechseln braucht, so würde die dann auch im lichtweiterführenden Teil des Handstückes notwendige Trennstelle einen nicht zu vernachlässigbaren Lichtverlust mit sich bringen, der wegen der baulichen Gegebenheiten der Handstücke in der Regel nicht durch eine leitungsstärkere und damit größere Lampe sowie durch einen im Querschnitt größeren Lichtleiter ausgeglichen werden kann.

Der im Anspruch 1 angegebenen Erfindung liegt die Aufgabe zugrunde, eine Kupplungsvorrichtung der eingangs genannten Gattung dahingehend zu verbessern, daß an den Kupplungskörper bei Bedarf alternativ ein erstes Handstück, oder Handstückeile, mit integriertem Lichtleiter und extern angeordnetem lichterzeugendem Element oder ein zweites Handstück, oder Handstückteil, mit integriertem lichterzeugendem Element im Sinne einer elektrischen Leitungsverbindung anschließbar sind, wobei auf leichtes Umrüsten von der einen auf die andere Benutzungsart sowie auf einen leichten Wechsel des lichtzuführenden Elementes zu achten ist.

Die erfindungsgemäße Kontaktanordnung ermöglicht es, an ein und demselben Kupplungskörper sowohl lichtweiterführende Handstücke, also solche mit durchgehendem Lichtleiter, aufzusetzen, als auch solche Handstücke, die selbst das lichterzeugende Element haben, wobei bei letzterem die Lampe vorteilhafterweise vor der letzten Trennstelle des Lichtleiters angeordnet ist. Ein Ausführungsbeispiel der Erfindung wird nachfolgend anhand der Zeichnung näher erläutert.

Es zeigen :

Fig. 1 und 2 zwei Turbinenhandstücke hinsichtlich Lichtführung in unterschiedlicher Ausführung,

Fig. 3 ein Kupplungsteil, an dem die Handstücke nach Fig. 1 bzw. Fig. 2 anschließbar sind,

Fig. 4 den Kupplungszapfen nach Fig. 3 im Längsschnitt,

Fig. 5 eine Einzelheit aus Fig. 4, und

Fig. 6 und 7 Einzelheiten einer anderen Ausführungsform der erfindungsgemäßen Vorrichtung.

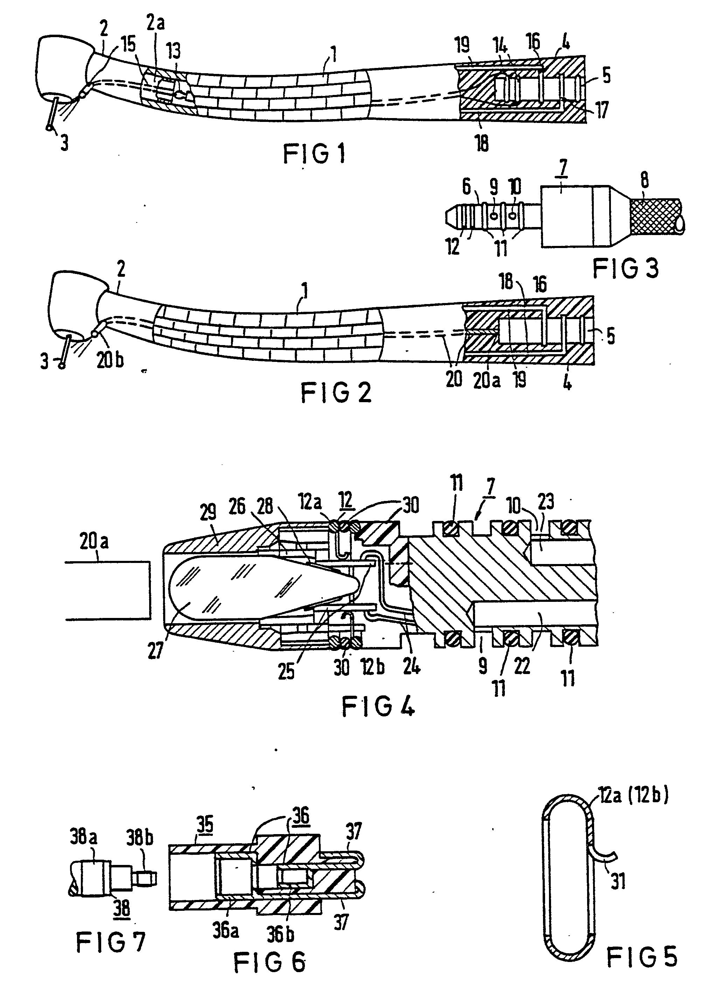

Die Figuren 1 und 2 zeigen zwei zahnärztliche Turbinenhandstücke üblicher Bauart, d. h., die Handstücke bestehen im wesentlichen aus einem langgestreckten Griffkörper 1, an dem sich ein Kopfteil 2 anschließt, welches mit seinem einen Ende 2a in den Griffkörper eingreift und an dieser Stelle auch vom Griffkörper 1 abkuppelbar ist und an seinem anderen Ende in bekannter Weise den Antrieb für ein rotierendes Werkzeug 3 aufnimmt. Das dem Kopfteil 2 abgewandte Ende des Griffkörpers bildet eine Hülse 4 mit einer Aufnahmebohrung 5, in die ein in Fig. 3 mit 6 bezeichneter Kupplungszapfen eines Kupplungsteiles 7 eingreift, an dem ein Versorgungsschlauch 8 angeschlossen ist, in dem Zuführungsleitungen für Luft und Wasser sowie elektrische Leitungen geführt sind. Die Zuführungsleitungen für Luft und Wasser enden in Bohrungen 9, 10, welche am Umfang des Kupplungszapfens 6 vorgesehen und durch Dichtringe 11 gegeneinander abgedichtet sind. Mit 12 ist ein aus zwei Schleifringen bestehendes Kontaktpaar bezeichnet, mit dem, wie später noch näher erläutert, Spannung an eine im vorderen, dem Kopfteilende 2a benachbarten Ende des Griffkörpers 1 des Handstückes nach Fig. 1 mit 13 angeordnete Glühlampe 13 übertragen werden kann. Zu diesem Zweck ist im Handstück nach Fig. 1 an korrespondierender Stelle ein Gegenkontaktpaar 14 vorgesehen, welches mittels nicht näher bezeichneter elektrischer Leitungen mit der Lampe 13 verbunden ist. Zur Weiterleitung des Lichtes von der im Groffkörper 1 angeordneten Lampe 13 an die Präparationsstelle ist im Kopfteil 2 ein Lichtleiter 15 vorgesehen, dessen eines Ende der Lampe 13 gegenübersteht und desses anderes Ende auf die Präparationsstelle ausgerichtet ist.

Die Übertragung der Medien Luft und Wasser erfolgt in bekannter Weise über Ringnute 16, 17 und mit diesen verbundene, zum Kopfteil 2 führende Leitungskanäle 18, 19.

Das Handstück nach Figur 2 ist bezüglich der Übertragung von Luft und Wasser gleich aufgebaut. Im Gegensatz zu dem Handstück nach Fig. 1 enthält dieses Handstück aber kein lichterzeugendes Element, also keine Lampe, sondern einen durchgehenden Lichtleiter 20, dessen im Bereich der Kupplungsstelle liegendes eine Ende 20a im Zentrum, ansonsten an geeigneter Stelle innerhalb des Handstückes, verläuft, und dessen anderes auf die Präparationsstelle ausgerichtetes Leiterende 20b am Kopfgehäuse 2 ausmündet.

Die Fig. 4 läßt Einzelheiten vom Kupplungszapfen 6 erkennen. Die Zufuhr von Luft und Wasser erfolgt über zunächst axparallel verlaufende und radial am Umfang des Zapfens in die Öffnungen 9, 10 mündende Kanäle 22, 23. Der besseren Übersichtlichkeit wegen sind im dargestellten Ausführungsbelspiel nur zwei Medienzufuhrleitungen, beispielsweise für Treibluft und Kühlwasser, eingezeichnet ; weitere Leitungen für z. B. gesonderte Kühlluft oder Rückluft können, wie an sich bekannt, in gleicher Weise geführt sein.

Elektrische Leitungen 24 führen Spannung an ein erstes Kontaktpaar 25 heran, welches in einem mit 26 bezeichneten, stirnseitig des Zapfens 6 offenen Aufnahmeraum für eine Glühlampe 27 fest angeordnet ist. Die Glühlampe 27 ist mit Kontakten 28 versehen, welche nach Einstecken der Lampe in die Halterung mit dem Kontaktpaar 25 kontaktieren. Mit 29 ist eine auf den Zapfen 6 aufschraubbare, nach vorne offene Schutzhülse für die Lampe 27 bezeichnet.

Das in Fig. 3 bereits angedeutete Kontaktpaar 12 weist zwei durch Isolatoren 30 elektrisch gegeneinander als auch gegen den üblicherweise aus Metall bestehenden Zapfen 6 isolierte ringförmige Kontaktfedern 12a, 12b auf, die entsprechend der Querschnittsdarstellung nach Fig. 5 ausgebildet sein können und die mit federnden Kontaktenden 31 versehen sind, die jeweils mit dem einen bzw. mit dem anderen Teil des im Hohlraum 26 fest angeordneten Kontaktpaares 25 Verbindung haben. Dadurch, daß zusätzlich zu dem einen, für die Kontaktierung der Lampe 27 vorgesehenen Kontaktpaar ein zweites Kontaktpaar 12 vorgesehen ist, welches mit dem ersten Kontaktpaar 25 elektrisch verbunden und an die Peripherie des Zapfens 6 herausgeführt ist, ist es möglich, sowohl ein Handstück, wie in Fig. 2 gezeigt, mit einem lichtweiterführenden Element auf das Kupplungsteil 7 aufzusetzen (In diesem Falle steht, wie in Fig. 4 angedeutet, das Lichtleiterende 20a der Lampe 27 korrespondierend gegenüber.) als auch ein Handstück, wie in Fig. 1 gezeigt, mit einem lichterzeugenden Element im Handstück, anzukuppeln, ohne daß am Kupplungteil selbst Veränderungen vorzunehmen sind. Im Falle der Aufsetzens eines Handstückes nach Fig. 2 bestehen, um einen Kurzschluß zu vermeiden, die Griffhülse 4 oder zumindest Teile davon im Bereich des Kontaktpaares 12 aus. Isoliermaterial.

Die Fig. 6 und 7 zeigen eine Variante des erfindungsgemäßen Vorschlages. Danach ist in einem Einsatzteil 35 aus Isoliermaterial ein Kontaktpaar 36 mit rotationssymmetrisch angeordneten Kontaktbuchsen 36a, 36b vorgesehen, deren Kontaktenden 37 nach außen herausgeführt sind. Das Einsatzteil 35 ist so ausgebildet, daß es anstelle der Lampe 27 stirnseitig in den Lampenraum 26 des Zapfens 6 verdrehsicher eingesetzt werden kann. Im eingesetzten Zustand ist das Kontaktpaar 36 mit den Kontaktenden 37 mit dem Kontaktpaar 25 verbunden.

Das am Handstück vorzusehende Gegenstück ist in Fig. 7 dargestellt. Es besteht aus einem Stecker 38 mit zu den Kontaktbuchsen 36a, 36b des Einsatzteiles 35 passenden, nach Art eines Klinkensteckers aufgebauten Steckstiften 38a, 38b, die zentrisch zur Aufnahmebohrung 5 an der Stelle angeordnet sind, wo sich bei dem Ausführungsbeispiel gemäß Fig. 2 der Lichtleiter 20 befindet.

Beide aufgezeigte Lösungen machen es möglich, bei ein und derselben Ausstattung des Kupplungsteiles sowohl lichtweiterführende Handstücke, wie in Fig. 2 gezeigt, als auch lichterzeugende Handstücke, wie in Fig. 1 gezeigt, alternativ vorzusehen, wobei ein Umrüsten jederzeit leicht möglich ist.

Wenngleich im Ausführungsbeispiel zwei gleichartige Handstücke (Turbinenhandstücke) aufgezeigt sind, so ist der erfindungsgemäße Vorschlag nicht nur für solche Bohrantriebe denkbar, vielmehr für alle anderen Arten von Handstücken, wie Ultraschall-, Elektrochirurgie-, Spritzhandstücke usw. Ebenso läßt sich der erfindungsgemäße Vorschlag nicht nur für rotationssymmetrische Kupplungsteile, die den Zweck haben, daß sich das aufsteckbare Handstück frei gegenüber dem Anschlußteil drehen läßt, anwenden ; der erfindungsgemäße Vorschlag ist ebenso auch für steckbare Handstücke bzw. Handstückteile anwendbar. Desweiteren ist es möglich, als Erstkontaktpaar Kontaktbuchsen, wie in Fig. 6 dargestellt, vorzusehen, an denen alternativ entweder ein Handstück mit konzentrischem Stekker gemäß Fig. 7 und eigener Lampe oder aber ein Einsatzteil einsetzbar ist, welches ein Zweikontaktpaar für die direkte Kontaktierung einer Lampe enthält. In diesem Falle können also primär Handstücke mit eigener Lampe und sekundär, nach Einsetzen eines Einsatzteiles mit einer entsprechenden Lampenfassung, Handstücke mit lichtweiterführenden Lichtleitern angeschlossen werden. Die Kontaktanordnung kann vorteilhafterweise auch für den direkten Anschluß einer Lampenfassung, die über die genannten Schleifringe ihre Spannung erhält, ausgebildet sein.

## Patentansprüche

·1. Kupplungsvorrichtung für den betriebsmäßig lösbaren Anschluß eines von mehreren, unterschiedlich gestalteten zahnärztlichen Handstücken, oder Teilen davon, an deren Kopfteile Kühlmittel und Licht benötigt werden, an ein Anschlußteil (7), enthaltend einen Kupplungskörper (6), der im gekuppelten Zustand in eine entsprechend ausgebildete Aufnahmehülse (4) des Handstückes (1, 2) eingreift, an der die Kühlmittel von an der Umfangsfläche des Kupplungskörpers (6) mündenden Kanälen (22, 23) übernommen und mittels weiterer Kanäle (18, 19) zum Kopfteil (2) des Handstückes geführt werden, wobei im Inneren des Kupplungskörpers (6) mit einer elektrischen Zuleitung (24) verbundene Leitungen verlaufen, die bis zum vorderen Ende des zur Aufnahme einer elektrischen Lampe (27) ausgebildeten und zu diesem Zweck stirnseitig offenen Kupplungskörpers (6) geführt sind und die dort in einem fest angeordneten Kontakpaar (25) enden, und wobei der Kupplungskörper (6) ferner mit der elektrischen Zuleitung (24) verbundene Schleifkontakte (12a, 12b ; 36a, 36b) aufweist, dadurch gekennzeichnet, daß die Schleifkontakte (12a, 12b ; 36a, 36b) dem Kontaktpaar (25) für die Lampe (27) am handstückseitigen Ende des Kupplungskörpers (6) zugeordnet sind und dort mit diesen eine Kontaktanordnung (12, 25, 36) bilden, an der alternativ die Kontakte (28) der im Kupplungskörper (6) zu halternden Lampe (27) oder die Anschlußkontakte (14, 38a, 38b) einer in einem auf den Kupplungskörper (6) aufsetzbaren Handstück (Fig. 1) angeordneten Lampe (13) anschließbar sind, wobei die Schleifkontakte (12a, 12b ; 36a, 36b) so angeordnet bzw. ausgebildet sind, daß sie bei axialem Aufstecken eines Handstückes (Fig. 1) mit im Handstück angeordneter Lampe (13) mit korrespondierend an diesem Handstück angeordneten und entsprechend ausgebildeten, mit der Lampe (13) verbundenen Gegenkontakten (14, 38a, 38b) in Eingriff kommen.

2. Kupplungsvorrichtung nach Anspruch 1, dadurch gekennzeichnet, daß die Kontaktanordnung ein Zweitkontaktpaar (12, 36) enthält, welches im montierten Zustand mit dem ersten, mit der Zuleitung (24) verbundenen Kontaktpaar (25) elektrisch verbunden ist.

3. Kupplungsvorrichtung nach Anspruch 2, dadurch gekennzeichnet, daß das Zweitkontaktpaar (12) Schleifkontakte (12a, 12b) sind, welche vom Inneren des Kupplungskörpers (6) zu dessen Peripherie geführt sind und im gekuppelten Zustand mit korrespondierend angeordneten Gegenkontakten (14) am aufgesetzten Handstück (Fig. 1) kontaktieren.

4. Kupplungsvorrichtung nach Anspruch 3, dadurch gekennzeichnet, daß die Schleifkontakte (12a, 12b) in einer Ausnehmung des Kupplungskörpers (6) eingesetzte Kontaktringe (Fig. 5) sind, die jeweils mit einer Anschlußfahne (31) an den Kontakten des Erstkontaktpaares (25) anliegen.

5. Kupplungsvorrichtung nach Anspruch 2, dadurch gekennzeichnet, daß das Zweitkontaktpaar (36) in einem Einsatzteil (35) angeordnet ist, welches anstelle der Lampe (7) in den dafür vorgesehen Raum (26) des Kupplungskörpers (6) verdrehsicher einsetzbar ist.

6. Kupplungsvorrichtung nach Anspruch 5, dadurch gekennzeichnet, daß das Einsatzteil (35) ein Zweitkontaktpaar (36) mit rotationssymmetrischen Kontaktbuchsen (36a, 36b) enthält, die mit nach Art eines Klinkensteckers (38) entsprechend ausgebildeten Gegenkontaktgliedern (38a, 38b) im Handstück bei dessen Ankupplung an den Kupplungskörper (6) in Eingriff kommen.

7. Kupplungsvorrichtung nach Anspruch 2, dadurch gekennzeichnet, daß das Erstkontaktpaar (25) im Kupplungskörper (6) angeordnete Schleifringe sind, mit denen entsprechend ausgebildete Gegenkontakte eines Einsatzteiles kontaktieren, die die Anschlußkontakte für die Lampe enthalten.

8. Kupplungsvorrichtung nach Anspruch 7, dadurch gekennzeichnet, daß das Einsatzteil die Lampenfassung bildet.

9. Kupplungsvorrichtung nach einem der Ansprüche 1 bis 8, dadurch gekennzeichnet, daß der Kupplungskörper rotationssymmetrisch aufgebaut ist und einen im Durchmesser gleichbleibenden zylindrischen Zapfen (6) enthält.

## Claims

1. Coupling device for the in-service releasable connection of one of several differently configured dental handpieces, or parts thereof, at whose head parts coolant and light are required, to a connecting part (7), containing a coupling body (6) which, in the coupled state, engages into a correspondingly designed receiving sleeve (4) of the handpiece (1, 2), in which the coolants are taken up from channels (22, 23) opening on the circumferential surface of the coupling body (6) and are conveyed by means of further channels (18, 19) to the head part (2) of the handpiece, wherein conductors extend on the inside of the coupling body (6), are joined to an electrical supply line (24) and are guided up to the front end of the coupling body (6), which is constructed to receive an electric light (27) and is open at the front for this purpose, the conductors ending there in a fixedly arranged pair of contacts (25), and wherein the coupling body (6) additionally has sliding contacts (12a, 12b ; 36a, 36b) connected to the electrical supply line (24), characterised in that the sliding contacts (12a, 12b ; 36a, 36b) are associated with the pair of contacts (25) for the light (27) on the handpiece end of the coupling body (6) and there form with them a contact arrangement (12, 25, 36) on which, as alternatives, the contacts (28) of the light (27) to be mounted in the coupling body (6) or the terminals (14, 38a, 38b) of a light (13) arranged in a handpiece (Fig. 1) which can be placed on to the coupling body (6) can be connected, with the sliding contacts (12a, 12b ; 36a, 36b) so arranged or designed that when a handpiece with a light (13) arranged in it is axially attached (Fig. 1), they come into engagement with counter contacts (14, 38a, 38b) connected to the light (13) and correspondingly arranged on this handpiece and appropriately constructed.

2. Coupling device according to claim 1, characterised in that the contact arrangement contains a second pair of contacts (12, 36) which is electrically connected in the assembled state to the first pair of contacts (25) connected to the supply line (24).

3. Coupling device according to claim 2, characterised in that the second pair of contacts (12) are sliding contacts (12a, 12b) which are guided from the inside of the coupling body (6) to its periphery and in the coupled state make contact with correspondingly arranged counter contacts (14) on the engaged handpiece (Fig. 1).

4. Coupling device according to claim 3, characterised in that the sliding contacts (12a, 12b) are contact rings (Fig. 5) inserted in a recess of the coupling body (6) which respectively abut, via a terminal lug (31), the contacts of the first pair of contacts (25).

5. Coupling device according to claim 2, characterised in that the second pair of contacts (36) is arranged in an insert (35) which can be inserted, locked against rotation, instead of the light (7) into the space (26) in the coupling body (6) provided for the light (7).

6. Coupling device according to claim 5, characterised in that the insert (35) contains a second pair of contacts (36) with rotationally symmetric contact bushings (36a, 36b) which come into engagement with counter contact elements (38a, 38b) appropriately constructed as in a jack plug (38) in the handpiece when the latter is coupled to the coupling body (6).

7. Coupling device according to claim 2, characterised in that the first pair of contacts (25) are slip rings arranged in the coupling body (6), with which correspondingly designed counter contacts of an insert containing the terminals for the light are in contact.

8. Coupling device according to claim 7, characterised in that the insert forms the light mounting.

9. Coupling device according to one of claims 1 to 8, characterised in that the coupling body is constructed with rotational symmetry and contains a cylindrical pin (6) of constant diameter.

## Revendications

1. Dispositif d'accouplement permettant le raccordement, détachable en liaison avec le fonctionnement, de l'une parmi plusieurs pièces à main de dentisterie ou parties de ces dernières, conformées différemment et au niveau des éléments de tête desquelles il est nécessaire de disposer d'un fluide de refroidissement et d'une lumière, à un organe de raccordement (7) contenant un corps d'accouplement (6) qui, à l'état accouplé, s'engage dans une douille réceptrice de forme correspondante (4) de la pièce à main (1, 2), au niveau de laquelle les fluides de refroidissement sont transférés par des canaux (22, 23) débouchant au niveau de la surface périphérique du corps d'accouplement (6) et sont amenés au moyen de canaux supplémentaires (18, 19) jusqu'à la partie de tête (2) de la pièce à main, et dans lequel à l'intérieur du corps d'accouplement (6) s'étendent des conducteurs qui sont reliés à une ligne d'alimentation électrique (24), s'étendent jusqu'à l'extrémité avant du corps d'accouplement (6) agencé de manière à loger une lampe électrique (27) et ouvert frontalement à cet effet, et se terminent, en cet endroit, par un couple de contacts (25) montés fixes, et dans lequel le corps d'accouplement (6) comporte en outre des contacts glissants (12a, 12b ; 36a, 36b) reliés à la ligne d'alimentation électrique (24), caractérisé par le fait que les contacts glissants (12a, 12b ; 36a, 36b) sont associés au couple de contacts (25) prévus pour la lampe (27) sur l'extrémité, côté pièce à main, du corps d'accouplement (6) et forment en cet endroit, avec ce corps, un dispositif à contacts (12, 25, 36), auquel alternativement les contacts (28) de la lampe (27) devant être maintenue dans le corps d'accouplement (6), ou les contacts de raccordement (14, 38a, 38b) d'une lampe (13) disposée dans une pièce à main pouvant être montée sur le corps d'accouplement (6) (figure 1), les contacts glissants (12a, 12b ; 36a, 36b) étant disposés ou agencés de telle sorte que, lors de l'enfichage axial d'une pièce à main (figure 1) munie d'une lampe (13) disposée dans cette dernière, lesdits contacts glissants viennent en prise avec des contacts antagonistes (14, 38a, 38b) prévus de façon correspondante sur cette pièce à main, agencés de façon correspondante et reliés à la lampe (13).

2. Dispositif d'accouplement suivant la revendication 1, caractérisé par le fait que le dispositif à contacts contient un second couple de contacts (12, 36), qui, à l'état monté, est relié électriquement au premier couple de contacts (25) relié à la ligne d'alimentation (24).

3. Dispositif d'accouplement suivant la revendication 2, caractérisé par le fait que le second couple de contacts (12) est constitué par les contacts glissants (12a, 12b), qui sont guidés depuis l'intérieur du corps d'accouplement (6) en direction de sa périphérie et sont en contact, à l'état accouplé, avec des contacts antagonistes (14) disposés de façon correspondante sur la pièce à main mise en place (figure 1).

4. Dispositif d'accouplement suivant la revendication 3, caractérisé par le fait que les contacts glissants (12a, 12b) sont des bagues de contact (figure 5), insérées dans un évidement du corps d'accouplement (6) et s'appliquant respectivement par une languette de raccordement (31) contre les contacts du premier couple de contacts (25).

5. Dispositif d'accouplement suivant la revendication 2, caractérisé par le fait que le second couple de contacts (36) est disposé dans une pièce formant insert (5) qui peut être insérée, avec blocage en rotation, à la place de la lampe (7), dans l'espace (26), prévu à cet effet, du corps d'accouplement (6).

6. Dispositif d'accouplement suivant la revendication 5, caractérisé par le fait que la partie formant insert (35) contient un second couple de contacts (36) comportant des douilles de contact (36a, 36b) à symétrie de révolution, qui viennent en prise avec des organes de contact antagonistes (38a, 38b), qui sont réalisés de façon correspondante à la manière d'un connecteur encliquetable (38) et situés dans la pièce à main, lors de l'accouplement de cette dernière au corps d'accouplement (6).

7. Dispositif d'accouplement suivant la revendication 2, caractérisé par le fait que le premier couple de contacts (25) est formé par des bagues coulissantes qui sont disposées dans le corps d'accouplement (6) et qui sont en contact avec des contacts antagonistes d'un élément formant insert, qui possèdent une configuration correspondante et contiennent les contacts de raccordement pour la lampe.

8. Dispositif d'accouplement suivant la revendication 7, caractérisé par le fait que l'élément formant insert forme la douille de la lampe.

9. Dispositif d'accouplement suivant l'une des revendications 1 à 8, caractérisé par le fait que le corps d'accouplement est constitué de manière à présenter une symétrie de révolution et contient un embout cylindrique (6) de diamètre constant.

FIG 1

FIG 3

FIG 2

FIG 4

FIG 7

FIG 6

FIG 5